# EUROPEAN PATENT APPLICATION

(11) **EP 2 806 231 A1**
(43) Date of publication of application: **26.11.2014**
(21) Application number: 12866258.2
(22) Date of filing: 17.09.2012
(51) Int. Cl.: F24H 1/36, F24H 9/00

(54) **HOT WATER STORAGE TANK-TYPE CONDENSING BOILER HAVING MULTI-STAGE STRUCTURE**

(30) Priority: 19.01.2012 KR 20120005977
(71) Applicant: Choi, Sung-hwan, Seoul 140-050 (KR)
(72) Inventor: Choi, Sung-hwan, Seoul 140-050 (KR)
(74) Representative: Spengler, Robert
(86) International application number: PCT/KR2012/007404
(87) International publication number: WO 2013/108977

(57) **Abstract**

The present invention relates to a hot water storage tank-type condensing boiler having a multi-stage structure, and particularly, to a hot water storage tank-type condensing boiler having a multi-stage structure in which the upper end plate of a water tank exposed to a firebox is formed to have a multi-stage structure so that the distances at which each portion of the upper end plate is exposed to a flame are the same to uniformly heat water filled within the water tank at each of the portions. In addition, like the upper end plate, the lower end plate may be formed to have a multi-stage structure so that the distances between each of the stages of the upper end plates and each of the stages of the lower end plate are the same. Thus, furnace tubes passing through the upper and lower end plates may have the same length to improve productivity and provide the same combustion load.

## Description

### [Technical Field]

The present invention relates to a hot water storage tank-type condensing boiler having a multi-stage structure, and more particularly, to a hot water storage tank-type condensing boiler having a multi-stage structure in which an upper end plate of a water tank exposed to a firebox is formed to have a multi-stage structure so that distances at which each portion of the upper end plate is exposed to a flame are the same to uniformly heat water filled within a water tank at each of the portions.

In addition, the present invention relates to a hot water storage tank-type condensing boiler in which, like the upper end plate, the lower end plate may be formed to have a multi-stage structure so that distances between each of the stages of the upper end plate and each of the stages of the lower end plate are the same so that furnace tubes passing through the upper and lower end plates may have the same length to improve productivity and provide the same combustion load.

### [Background Art]

In general, boilers that are used at home, in an office, a factory, and various public buildings are classified into hot storage water tank-type heaters and instantaneous (also called "tankless") boilers according to a method of heating water

In an instantaneous boiler, direct water supplied via a direct water pipe is supplied to a heat exchanger, is instantaneously heated by a burner and then is supplied to a user. The instantaneous boiler has a fast heating speed, but the amount of the direct water that may be heated at one time, is small such that the instantaneous boiler cannot supply a sufficient amount of hot water or heated water.

On the other hand, in the hot water storage tank-type boiler, since the direct water that flows into the direct water pipe is always heated by heat-exchanging coils installed within a hot water tank at an appropriate high temperature, the user can use hot water or heated water immediately, and the amount of supply of hot water or heated water is larger than that of the instantaneous boiler.

Some documents including Korean Patent Publication No. 2011-0135438 disclose a hot water storage tank-type condensing boiler, in which an end plate in a firebox into which a flame generated in a burner is emitted, which is formed to have a multi-stage structure in which heights of portions of the end plate are different, so as to prevent boiling noise from occurring due to an air layer that remains in the firebox and inner sides of furnace tubes when combustion heat is concentrated.

However, in the above-described related art, boiling noise can be prevented, but distances between each of the portions of a water tank exposed to the firebox and the flame are not the same such that a water cutoff phenomenon cannot be prevented from occurring.

That is, the water cutoff phenomenon occurs, for example, when an amount of heated water or hot water is insufficient. The water tank is locally overheated by the flame generated in the burner, and water is changed into water vapor of 100°C or higher so that water flow causes a part of water in the water tank to shake or shudder. If the water cutoff phenomenon cannot be prevented, the supply of heated water or hot water is not efficiently performed, and noise occurs due to water shock.

In addition, in the related art, when the end plate in the firebox is formed to have a multi-stage structure so as to prevent boiling noise, lengths of furnace tubes passing through each of the stages need to be different. Thus, furnace tubes having various lengths need to be individually manufactured, and when assembling of the furnace tubes is performed, a furnace tube having a length suitable for each stage needs to be found. Thus, productivity is greatly lowered.

### [Disclosure]

### [Technical Problem]

The present invention is directed to providing a hot water storage tank-type condensing boiler having a multi-stage structure in which an upper end plate of a water tank exposed to a firebox is formed to have a multi-stage structure so that distances at which each portion of the upper end plate is exposed to a flame are the same to uniformly heat water filled within a water tank at each of the portions.

The present invention is also directed to providing a hot water storage tank-type condensing boiler in which, like the upper end plate, the lower end plate may be formed to have a multi-stage structure so that distances between each of the stages of the upper end plate and each of the stages of the lower end plate are the same so that furnace tubes passing through the upper and lower end plates may have the same length to improve productivity and provide the same combustion load.

### [Technical Solution]

One aspect of the present invention provides a hot water storage tank-type condensing boiler having a multi-stage structure, including: a boiler casing having a firebox disposed in the boiler casing; a burner that is installed on an upper portion of the boiler casing and that emits a flame toward the firebox; an upper end plate that constitutes an upper plate of a water tank installed to be exposed to the firebox and has a multi-stage structure including multi-stage portions so that heights of the stages are increased from a center of the upper end plate where distances from the flame that is emitted toward the firebox are closest, to ends of the upper end plate where the distances from the burner to the flame are farthest; a lower end plate that constitutes a lower plate of the water tank, has the same pattern as that of the upper end plate and has a multi-stage structure including multi-stage portions so that heights of the stages are increased from a center to ends of the lower end plate; and a plurality of furnace tubes which are installed to pass through the upper end plate and the lower end plate, of which open top ends are connected to the firebox and of which open bottom ends are connected to a combustion gas discharge portion.

Distances between each of the stages of the upper end plate and each of the stages of the lower end plate that are disposed directly under each of the stages of the upper end plate may be the same, respectively.

The plurality of furnace tubes may have the same length and may be respectively installed at each of the stages of the upper end plate and at each of the stages of the lower end plate that have the same distances between each of the stages of the upper end plate and each of the stages of the lower end plate.

Wrinkled extrusion pins may be inserted into the furnace tubes.

### [Advantageous Effects]

As described above, in a hot water storage tank-type condensing boiler having a multi-stage structure according to the present invention, an upper end plate of a water tank exposed to a firebox is formed to have a multi-stage structure so that distances at which each portion of the upper end plate is exposed to a flame are the same. Thus, water filled in the water tank is uniformly heated at each of the portions so as to prevent a water cutoff phenomenon from occurring due to part of the water tank that is locally overheated.

In addition, according to the present invention, like the upper end plate, the lower end plate is formed to have a multi-stage structure so that distances between each of stages of the upper end plate and each of stages of the lower end plate are the same so that furnace tubes passing through the upper and lower end plates may have the same length. Thus, the furnace tubes are manufactured to have the same length and thus can be assembled without having to provide different lengths so that productivity can be improved and the same combustion load can be provided through each of the furnace tubes.

### [Description of Drawings]

FIG. 1 is a front cross-sectional view of a hot water storage tank-type condensing boiler having a multi-stage structure according to an embodiment of the present invention.
FIG. 2 is an upper side view of the hot water storage tank-type condensing boiler having the multi-stage structure illustrated in FIG. 1.
FIG. 3 is a lower side view of the hot water storage tank-type condensing boiler having the multi-stage structure of FIG. 1.
FIG. 4 is a plan view of the hot water storage tank-type condensing boiler having the multi-stage structure of FIG. 1.

### [Modes of the Invention]

Hereinafter, a hot water storage tank-type condensing boiler having a multi-stage structure according to an exemplary embodiment of the present invention will be described with reference to the accompanying drawings.

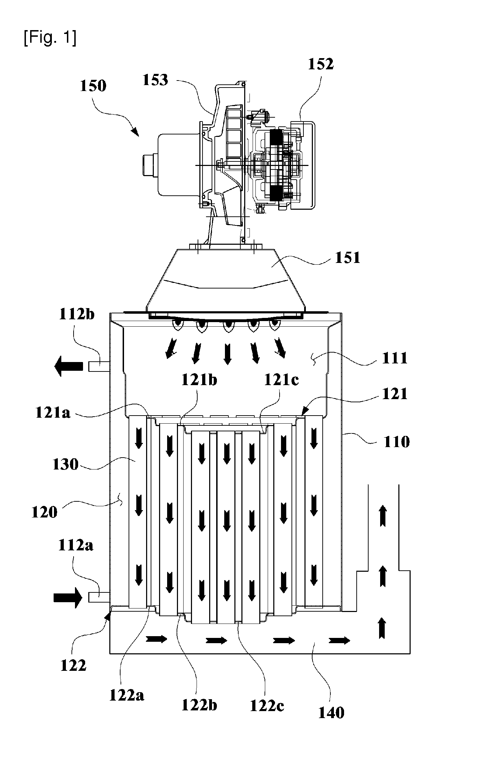

First, as illustrated in FIG. 1, a hot water storage tank-type condensing boiler having the multi-stage structure according to the current embodiment of the present invention includes a boiler casing 110 having a firebox 111 disposed in the boiler casing 110, a supply pipe 112a that supplies direct water, a discharge pipe 112b that discharges hot water or heated water, and a combustion unit 150 having a burner 151 that emits a flame toward the firebox 111.

In addition, the hot water storage tank-type condensing boiler having the multi-stage structure according to the current embodiment of the present invention further includes an upper end plate 121 that constitutes an upper plate of a water tank 120 installed to be exposed to the firebox 111, a lower end plate 122 that constitutes a lower plate of the water tank 120, furnace tubes 130 that performs a heat-exchanging process between a high-temperature combustion gas and water, and a combustion gas discharge portion 140 that discharges a low-temperature combustion gas passing through the furnace tubes 130 to the outside.

In this case, the boiler casing 110 constitutes a body of the boiler. The combustion unit 150 including the burner 151 is installed on a top end of the boiler casing 110, and the firebox 111 in which the flame generated in the burner 151 is emitted, is disposed at an upper portion of inner sides of the boiler casing 110 in which burner ports of the burner 151 are disposed, and the water tank 120 surrounded by the end plates is installed in the boiler casing 110 to be exposed to the firebox 111.

In addition, for example, the supply pipe 112a is connected to a lower portion of the boiler casing 110, and the discharge pipe 112b is connected to an upper portion of the boiler casing 110. The supply pipe 112a is connected to the water tank 120 via the boiler casing 110 and supplies direct water or preheated water, and the discharge pipe 112b discharges heated hot water or heated water to a load side of the boiler by passing through the water tank 120.

The combustion unit 150 includes the burner 151, a blower fan 152, and a fuel suction port 153, as well known to one of ordinary skill in the art. In particular, the burner 151 pre-mixes supplied fuel and air at an appropriate ratio to improve combustion characteristics. Thus, the burner 151 may be a low nitrogen oxide generation burner 151 that reduces generation of a nitrogen oxide (NOx). The burner 151 emits the flame and a high-temperature combustion gas generated during combustion toward the firebox 111.

The upper end plate 121 constitutes the upper plate of the water tank 120 installed to be exposed to the firebox 111. The upper end plate 121 has a multi-stage structure in which heights of portions 121a, 121b, and 121c are different from each other compared to a bottom surface of the boiler casing 110. In particular, in the present invention, the heights of the portions 121a, 121b, and 121c are increased from a center of the upper end plate 121 where distances from the burner 151 to the flame that is emitted toward the firebox 111 are closest, to ends of the upper end plate 121 where the distances from the burner 151 to the flame are farthest.

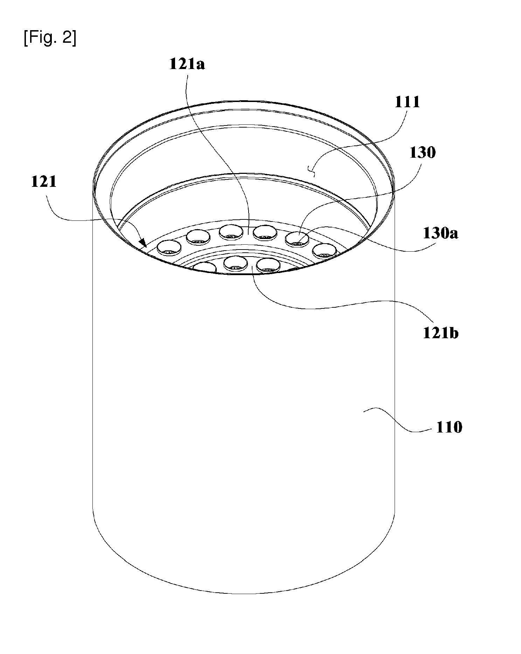

For example, as illustrated in FIGS. 1 and 2, the upper end plate 121 has a three-stage structure including a first stage 121a, a second stage 121b, and a third stage 121c. The height of the first stage 121a that is the outermost portion of the upper end plate 121 is the largest, and the height of the third stage 121c that is the center of the upper end plate 121 is the smallest, and the second stage 121b between the first stage 121a and the third stage 121c has an intermediate height. Also, the heights of the stages 121a, 121b, and 121c are adjusted so that amounts of heat transferred from the flame are the same.

Since heat caused by the flame that is emitted from the burner 151 is transferred in a radial direction, distances between the center of the boiler and the upper end plate 121 are closest and become farther, closer to the outer sides of the boiler. Thus, the height of the upper end plate 121 is increased from the center to its ends so that distances at which each of the stages 121a, 121b, and 121c of the upper end plate 121 is exposed to the flame, are the same.

Thus, by forming the upper end plate 121 to have a multi-stage structure, amounts of heat transferred to the stages 121a, 121b, and 121c of the upper end plate 121 by the flame generated in the burner 151 are the same. Thus, water filled in the water tank 120 is uniformly heated at each of the portions, and a water cutoff phenomenon can be prevented from occurring due to part of the water tank 120 that is locally overheated.

The water cutoff phenomenon is a phenomenon in which part of the water tank 120 is locally overheated by the flame generated in the burner 151 compared to other parts and water is changed into water vapor of 100°C or higher so that water flow causes a part of water in the water tank to shake or shudder. As with the present invention, if the water tank 120 is uniformly heated, local overheating is prevented, and circulation caused by convection of water is well performed so that heated water or hot water can be smoothly supplied without cutoff. Also, since water is continuously convected, noise caused by water shock is also removed.

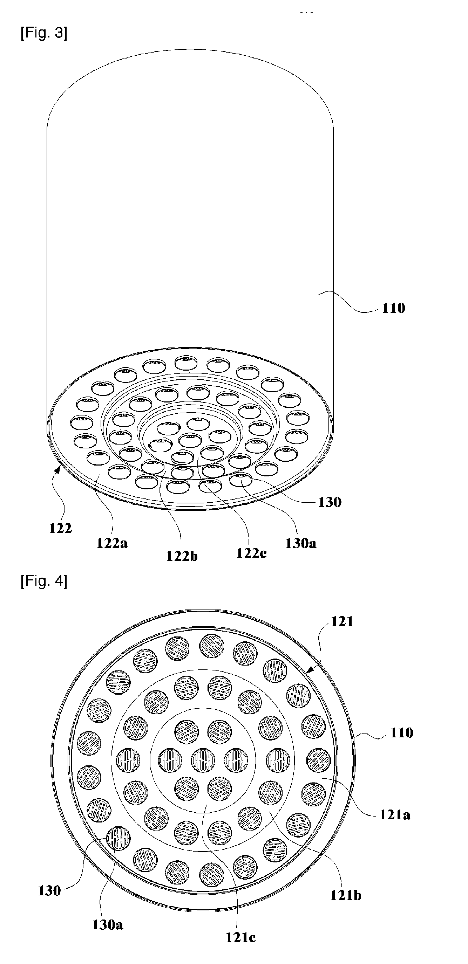

In addition, according to the present invention, the lower end plate 122 that is adjacently installed at a lower side of the upper end plate 121 also has a multi-stage structure. In this case, the lower end plate 122 has the same pattern as that of the upper end plate 121. That is, as illustrated in FIGS. 1 and 3, the lower end plate 122 also has a three-stage structure including a first stage 122a, a second stage 122b, and a third stage 122c. Heights are further decreased from the first stage 122a that is the outermost portion of the lower end plate 122 to the third stage 122c that is the center of the lower end plate 122 so that distances from the burner 151 to the stages of the lower end plates 122 become farther.

In particular, positions of the stages 121a, 121b, and 121c of the upper end plate 121 and positions of the stages 122a, 122b, and 122c of the lower end plate 122 corresponding to the upper end plate 121 are the same in a vertical direction. Simultaneously, height differences between the stages 121a, 121b, 121c and the stages 122a, 122b, and 122c, for example, a height difference between the stages 121a and 121b and a height difference between the stage 122a and the stage 122b, are the same so that distances between each of the stages 121a, 121b, and 121c of the upper end plate 121 and each of the stages 122a, 122b, and 122c of the lower end plate 122 that are disposed directly under each of the stages 121a, 121b, and 121c of the upper end plate 121 are the same.

Thus, lengths of a plurality of furnace tubes 130 passing through the upper end plate 121 and the lower end plate 122 are also the same. Thus, a plurality of furnace tubes 130 having the same length are manufactured using the same process, and when the plurality of furnace tubes 130 are assembled, any furnace tube 130 having a length suitable for each of the stages 121a, 121b, and 121c or 122a, 122b, and 122c may be used without having to provide different lengths. Thus, productivity is remarkably improved compared to the related art.

In addition, temperatures of combustion gases discharged through the furnace tubes 130 are the same, and simultaneously, lengths of the furnace tubes 130 are the same to provide the same combustion load via each furnace tube 130 so that water filled in the water tank 120 can be uniformly heated and a particular furnace tube 130 can be prevented from being damaged earlier than other furnace tubes 130 due to the amount of heat that is excessively concentrated on a particular furnace tube 130.

The furnace tubes 130 provide a flow path on which a high-temperature combustion gas is discharged, so that a heat-exchanging process between the high-temperature combustion gas being discharged and water filled in the water tank 120 can be performed. According to the present invention, the flame generated in the burner 151 directly heats the water tank 120, and water in the water tank 120 is heated with the high-temperature combustion gas so that a condensing boiler having high thermal efficiency is configured.

To this end, the plurality of furnace tubes 130 are installed to pass through the upper end plate 121 and the lower end plate 122, respectively. Thus, open top ends of the furnace tubes 130 are connected to the firebox 111, and open bottom ends of the furnace tubes 130 are connected to the combustion gas discharge portion 140, and space between the open top ends and the open bottom ends of the furnace tubes 130 formed in the water tank 120 is filled with water. In this case, lengths of all furnace tubes 130 are the same, as described above.

That is, the furnace tubes 130 of a first group are installed along the first stage 121 a of the upper end plate 121 and the first stage 122a of the lower end plate 122 each having a circular band shape at regular intervals, and the furnace tubes 130 of a second group that are the same as the first group are installed along the second stage 121b of the upper end plate 121 and the second stage 122b of the lower end plate 122, and the furnace tubes 130 of a third group that are the same as the first group are installed along the third stage 121c of the upper end plate 121 and the third stage 122c of the lower end plate 122.

However, wrinkled extrusion pins 130a may be inserted into the furnace tubes 130, as illustrated in FIG. 4. If the extrusion pins 130a are inserted into the furnace tubes 130 so that outer circumferential surfaces of the extrusion pins 130a come in contact with inner circumferential surfaces of the furnace tubes 130, a contact surface area between water and the combustion gas is increased by the extrusion pins 130a so that a heat transfer amount is increased and a heat-exchanging rate between the combustion gas and water is increased.

The combustion gas discharge portion 140, of which description is omitted, is installed at the lower portion of the boiler casing 110, and bottom ends of the furnace tubes 130 communicate with an inside of the combustion gas discharge portion 140. Thus, the high-temperature combustion gas generated when the boiler combusts a fuel, is discharged through the furnace tubes 130, and the combustion gas, of which heat is lost when passing through the furnace tubes 130 and of which temperature is decreased, is discharged to the outside through the combustion gas discharge portion 140.

However, the combustion gas discharged through the combustion gas discharge portion 140 has a low temperature and thus condensation water to which the combustion gas has condensed, is generated. Thus, a drain pipe (not shown) for discharging the condensation water may be installed at one side of the combustion gas discharge portion 140.

### [Industrial Applicability]

While the invention has been shown and described with reference to certain exemplary embodiments thereof, it will be understood by those skilled in the art that various changes in form and details may be made therein without departing from the spirit and scope of the invention as defined by the appended claims.

## Claims

1. A hot water storage tank-type condensing boiler having a multi-stage structure, comprising:
a boiler casing (110) having a firebox (111) disposed in the boiler casing (110);
a burner (151) that is installed on an upper portion of the boiler casing (110) and that emits a flame toward the firebox (111);
an upper end plate (121) that constitutes an upper plate of a water tank (120) installed to be exposed to the firebox (111) and has a multi-stage structure including multi-stage portions (121a, 121b, and 121c) so that heights of the stages (121a, 121b, and 121c) are increased from a center of the upper end plate (121) where distances from the flame that is emitted toward the firebox (111) are closest, to ends of the upper end plate (121) where the distances from the burner (151) to the flame are farthest;
a lower end plate (122) that constitutes a lower plate of the water tank (120), has the same pattern as that of the upper end plate (121) and has a multi-stage structure including multi-stage portions (122a, 122b, and 122c) so that heights of the stages (122a, 122b, and 122c) are increased from a center to ends of the lower end plate (122); and
a plurality of furnace tubes (130) which are installed to pass through the upper end plate (121) and the lower end plate (122), of which open top ends are connected to the firebox (111) and of which open bottom ends are connected to a combustion gas discharge portion (140).

2. The hot water storage tank-type condensing boiler of claim 1, wherein distances between each of the stages (121a, 121b, and 121c) of the upper end plate (121) and each of the stages (122a, 122b, and 122c) of the lower end plate (122) that are disposed directly under each of the stages (121a, 121b, and 121c) of the upper end plate (121) are the same, respectively.

3. The hot water storage tank-type condensing boiler of claim 2, wherein the plurality of furnace tubes (130) have the same length and are respectively installed at each of the stages (121a, 121b, and 121c) of the upper end plate (121) and at each of the stages (122a, 122b, and 122c) of the lower end plate (122) that have the same distances between each of the stages (121a, 121b, and 121c) of the upper end plate (121) and each of the stages (122a, 122b, and 122c) of the lower end plate (122).

4. The hot water storage tank-type condensing boiler of any one of claims 1 through 3, wherein wrinkled extrusion pins (130a) are inserted into the furnace tubes (130).
